# EUROPÄISCHE PATENTSCHRIFT

(11) **EP 2 174 699 B1**
(45) Veröffentlichungstag und Bekanntmachung des Hinweises auf die Patenterteilung: **16.09.2015**
(21) Anmeldenummer: 09012501.4
(22) Anmeldetag: 02.10.2009
(51) Int. Cl.: B01D 53/08, B01D 53/62, B01D 53/73, B01D 53/83

(54) **Verfahren und Anordnung zur Abscheidung von CO2 aus Verbrennungsabgas**
Method and assembly for separating CO2 from combustion waste gas
Procédé et agencement de séparation de CO2 de gaz d'échappement de combustion

(30) Priorität: 08.10.2008 DE 102008050816
(43) Veröffentlichungstag der Anmeldung: 14.04.2010
(73) Patentinhaber: ALSTOM Technology Ltd, 5401 Baden (CH)
(72) Erfinder: Epple, Bernd, 64395 Brensbach (DE)
(74) Vertreter: Alstom Technology Ltd

(56) Entgegenhaltungen:
- WO-A-2007/045048
- US-A1- 2005 060 985
- US-A1- 2006 093 540
- US-A1- 2008 072 762
- ROMEO ET AL: "Process Optimization in Postcombustion CO2-Capture by means of Repowering and Reversible Carbonation/Calcination Cycle" 2006, INT CONF ON GREENHOUSE GAS CONTROL TECHNOLOGIES , TRONDHEIM , XP002563822 * das ganze Dokument *
- CARLOS ABANADES J ET AL: "Fluidized Bed Combustion Systems Integrating C02 Capture with CaO", ENVIRONMENTAL SCIENCE AND TECHNOLOGY, AMERICAN CHEMICAL SOCIETY. EASTON, PA, US , vol. 39, no. 8 15 April 2005 (2005-04-15), pages 2861-2866, XP008150169, ISSN: 0013-936X, DOI: 10.1021/ES0496221 Retrieved from the Internet: URL:http://pubs.acs.org/journals/esthag/in dex.html [retrieved on 2005-03-02]

## Beschreibung

Die Erfindung bezieht sich auf ein Verfahren und eine Anordnung zur Abscheidung von CO₂ aus Verbrennungsabgas. Die Erfindung bezieht sich insbesondere auf ein Verfahren und eine Anordnung zur Abscheidung von CO₂ aus Verbrennungsabgas, das durch die Verbrennung von kohlenstoffhaltigen Brennstoffen oder Abfällen unter Zuhilfenahme von Luft als Oxidationsmittel in einer Brennkammer entsteht.

Ein derartiges Verfahren ist aus der Druckschrift "Process Optimization in Postcombustion CO2-Capture by means of Repowering and Reversible Carbonation/Calcination Cycle", von Luis M. Romeo et al., ENDESA, Spain, 8 Int Conf on Greenhouse Gas Control Technologies, Trondheim, June 2006, Norway bekannt geworden.

Bei diesem bekannten Verfahren wird ein Großteil des im Verbrennungsabgas enthaltenen CO₂ mittels eines in Strömungsrichtung des Verbrennungsabgases gesehen stromabwärts der Brennkammer ("Postcombustion") angeordneten Karbonat-Kreislauf-Systems ("Carbonate Looping System" oder "Reversible Carbonation/Calcination Cycle") abgeschieden und einer weiteren Behandlung zugeführt. Zur Abscheidung des CO₂ wird das Sorbens CaO, d.h. Kalziumoxid bzw. Branntkalk, eingesetzt und innerhalb des Karbonat-Kreislauf-Systems im Kreislauf gefahren. Das CaO, das im Kalzinierer bei einer Temperatur von 900-950°C produziert bzw. regeneriert wird, wird mit dieser Temperatur über eine den Kalzinierer mit dem Karbonator verbindenden Kanal dem Karbonator zugeführt. Im Karbonator, in den das CO₂ enthaltende Verbrennungsabgas aus der Brennkammer eingeleitet wird und der ein zirkulierendes Wirbelschichtbett aufweist, bindet das Sorbens Ca0 bei einer Temperatur von etwa 650°C einen Großteil des im Verbrennungsabgas enthaltenden CO₂ zu dem Kalziumkarbonat CaCO₃. Das aus dem Karbonator austretende Feststoff-/Gasgemisch wird einem Abscheider zugeführt und darin die Feststoffe von dem Verbrennungsabgas abgeschieden. Das CO₂ reduzierte Verbrennungsabgas wird über eine gegebenenfalls vorhandene Behandlungseinrichtung der Atmosphäre und die im wesentlichen CaCO₃, aber auch Asche, CaSO₄ und CaO aufweisenden Feststoffe über Kanäle dem Kalzinierer zugeführt. Im Kalzinierer wird CaCO₃ bei einer Kalziniertemperatur von 900-950°C gebrannt bzw. kalziniert und dabei ein festes und ein gasförmiges Produkt erzeugt. Das feste Produkt weist im Wesentlichen aus dem CaCO₃ regeneriertes CaO und das gasförmige Produkt weist im wesentlichen CO₂ und Wasser auf. Da das Kalzinieren als endotherme Reaktion abläuft, muss Wärme in den Kalzinierer eingebracht werden, um die erforderliche Kalzinier- bzw. Reaktionstemperatur bereit zu stellen. Dies erfolgt durch eine Zufeuerung im Kalzinierer, bei der Kohle mittels des Oxidierungsmittels bzw. Oxidans O₂ verfeuert und damit Wärme in den mit einem zirkulierenden Wirbelschichtbett ausgebildeten Kalzinierer eingebracht wird. Um das im Kalzinierer entstehende gasförmige Produkt nicht mit beispielsweise Stickstoff zu verdünnen und somit die Abscheidung des CO₂ zu erschweren, wird für die Zufeuerung als Oxidans obligatorischerweise O₂ anstelle von Luft verwendet. Das regenerierte CaO wird mit einer Produktwärme von etwa 900°C aus dem Kalzinierer dem Karbonator als Sorbens zugeführt. Mit derselben Produktwärme wird das im Wesentlichen CO₂ enthaltende Gasprodukt aus dem Kalzinierer ausgeleitet und das CO₂ einer weiteren Behandlung zugeführt, in diesem Fall abgekühlt, komprimiert und zur Lagerung transportiert. Das vorbeschriebene Verfahren läuft kontinuierlich ab.

US 2005/0060985 A1 beschreibt ein Verfahren bzw. eine Vorrichtung zum Abscheiden von CO2 auf Basis des technischen Kalkprozesses bzw. der Karbonisierung nach dem Stand der Technik. Es wird vorgeschlagen, dabei entstehende Wärme in elektrische Energie umzuwandeln. Die elektrische Energie wird dem technischen Kalkprozess entzogen, so dass zu dessen Aufrechterhaltung wieder Energie, z.B. in Form von Brennstoff zugeführt werden muss.

In WO 2007/045048 A1 ist ebenfalls der technische Kalkprozess beschrieben. Im Kalzinierer wird das Karbonat durch Aufheizen der Kalziniererwände erwärmt. Im Abgasstrom können Wärmetauscher zur Rekuperation von Wärme vorhanden sein.

Als nachteilig an dem bekannten Verfahren bzw. der bekannten Anordnung zeigt sich, dass dieses Verfahren bzw. diese Anordnung mit einem Wirkungsgradverlust von ca. 3 Prozentpunkten behaftet ist. Dieser Wirkungsgradverlust ist im Wesentlichen auf den Kalzinierer zurückzuführen, der mit einer Zufeuerung ausgebildet und damit befeuert ist, bei welcher technisch reiner Sauerstoff als Oxidans bzw. Oxidationsmittel zur Verfeuerung des Brennstoffes bzw. der Kohle eingesetzt wird. Dabei ist die Herstellung von Sauerstoff für den Einsatz als Oxidans im Kalzinierer mit einem hohen energetischen Aufwand verbunden, welcher zu dem Verlust von ca. 3 Wirkungsgradprozentpunkten der Gesamtanlage führt.

Aufgabe der Erfindung ist es nun, ein Verfahren zur Abscheidung von CO₂ aus Verbrennungsabgas, das durch die Verbrennung von kohlenstoffhaltigen Brennstoffen oder Abfällen unter Zuhilfenahme von Luft als Oxidationsmittel in einer Brennkammer entsteht, zu schaffen, das die vorgenannten Nachteile vermeidet. Insbesondere ist es Aufgabe der Erfindung, ein Verfahren zur Abscheidung von CO₂ aus Verbrennungsabgas, das durch die Verbrennung von kohlenstoffhaltigen Brennstoffen oder Abfällen unter Zuhilfenahme von Luft als Oxidationsmittel in einer Brennkammer entsteht, zu schaffen, bei dem der Zufeuerungsbedarf und damit der Sauerstoffbedarf für den Kalzinierer reduziert wird oder ganz entfallen kann. Es ist des Weiteren eine Aufgabe der Erfindung, eine Anordnung zur Abscheidung von CO₂ aus Verbrennungsabgas, das durch die Verbrennung von kohlenstoffhaltigen Brennstoffen oder Abfällen unter Zuhilfenahme von Luft als Oxidationsmittel in einer Brennkammer entsteht, vorzuschlagen.

Die vorstehend genannte Aufgabe wird hinsichtlich des Verfahrens durch die Merkmale des Patentanspruches 1 und hinsichtlich der Anordnung durch die Merkmale des Patentanspruches 6 gelöst.

Vorteilhafte Ausgestaltungen der Erfindung sind den Unteransprüchen zu entnehmen.

Durch die erfindungsgemäße Lösung wird ein Verfahren und eine Anordnung zur Abscheidung von CO₂ aus Verbrennungsabgas, das durch die Verbrennung von kohlenstoffhaltigen Brennstoffen oder Abfällen unter Zuhilfenahme von Luft als Oxidationsmittel in einer Brennkammer entsteht, geschaffen, das bzw. die die nachfolgenden Vorteile aufweist:
- Wesentliche Reduzierung bis hin zur völligen Eliminierung des Zufeuerungsbedarfs und somit des Sauerstoffbedarfs für den Betrieb des Kalzinierers,
- Durch die Reduzierung bzw. Eliminierung des Sauerstoffbedarfs wird der hohe energetische Aufwand für die Sauerstoffherstellung reduziert bzw. eliminiert und der infolge der Sauerstoffherstellung auftretende Wirkungsgradverlust der Gesamtanlage wesentlich reduziert.

Die Erfindung sieht vor, dass als Fremdwärmequelle der erwärmte und Sorbens enthaltende - Feststoffmassenstrom ( F2 ) herangezogen wird und die Entnahme eines Teils dessen enthaltender Wärme vor Eintritt des Feststoffmassenstroms F2 in den Karbonator erfolgt. Dadurch sinkt die Zufeuerungsrate im Kalzinierer und damit der Bedarf an technischem Sauerstoff. Damit reduziert sich der energetische Aufwand zur Sauerstoffherstellung und somit der Wirkungsgradverlust.

Ferner wird als Fremdwärmequelle der am Kalzinierer austretende, erwärmte und CO₂ -enthaltende Gasmassenstrom ( G2 ) herangezogen, wobei die Entnahme eines Teils dessen enthaltender Wärme vor einer weiteren wärmeseitigen Behandlung erfolgt. Durch diese Maßnahme sinkt die Zufeuerungsrate im Kalzinierer und damit der Bedarf an technischem Sauerstoff. Damit reduziert sich der energetische Aufwand zur Sauerstoffherstellung und somit der Wirkungsgradverlust.

Eine vorteilhafte Ausgestaltung der Erfindung sieht vor, dass als Sorbens natürliche oder synthetische Materialien verwendet werden. Natürliche Sorbentien sind günstig zu erwerben und lassen sich problemlos entsorgen bzw. weiterverwenden. Synthetische Materialien können höhere mechanische und chemische Stabilität aufweisen. Somit sinkt die erforderliche umlaufende Menge und die Menge frischer Sorbentien.

Eine weitere vorteilhafte Ausbildung der Erfindung sieht vor, dass als Sorbensmittel CaO verwendet wird. CaO in Form von Kalkstein ist günstig zu erwerben und problemlos zu entsorgen bzw. weiterzuverwenden.

Eine vorteilhafte Ausbildung der Erfindung sieht vor, dass der Wärmetausch regenerativ oder rekuperativ erfolgt. Durch diese Maßnahme wird es ermöglicht, übliche und bewährte Wärmetauscher für den benötigten Wärmetausch einzusetzen.

Erfindungsgemäss erfolgt die Wärmeverschiebung mittels eines Wärmeträgers, der günstige thermodynamische Eigenschaften aufweist. Durch diese Maßnahme ist ein geringerer umzuwälzender Massenstrom erforderlich, wodurch die Pumpleistung niedrig gehalten werden kann. Ebenso sind die Baugrößen für Wärmetauscher, Leitungsquerschnitte etc. geringer.

Erfindungsgemäss wird als Wärmeträger Helium oder Natrium verwendet. Diese Wärmeträger weisen günstige thermodynamische Eigenschaften mit den oben angeführten Vorteilen auf.

In zweckmäßiger Ausbildung der Erfindung werden für die Zufeuerung im Kalzinierer fossile Brennstoffe oder Biomasse oder Abfälle oder eine Mischung der vorgenannten Stoffe benutzt. Durch diese Maßnahme können die Brennstoff-und damit Betriebskosten niedrig gehalten werden.

Nachstehend sind Ausführungsbeispiele der Erfindung an Hand der Zeichnungen und der Beschreibung näher erläutert.

Es zeigt:

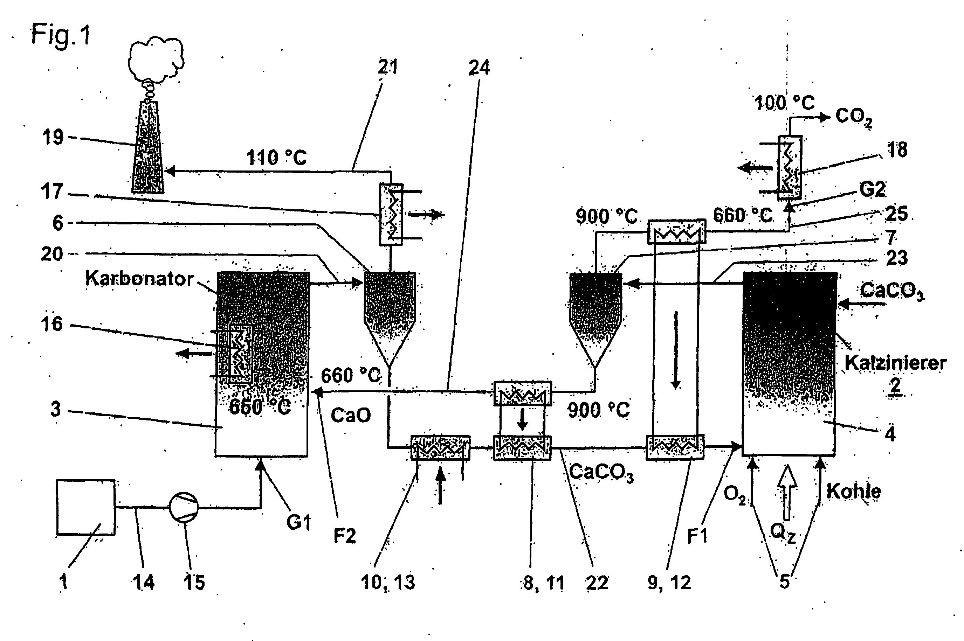

- Fig.1: schematisch dargestellt eine Anordnung zur Abscheidung von CO₂ aus Verbrennungsabgas bzw. ein Karbonat-Kreislauf-System (Carbonate Looping System) stromabwärts einer Brennkammer (Postcombustion).

Figur zeigt schematisch eine Anordnung zur Abscheidung von CO₂ aus Verbrennungsabgas bzw. ein Karbonat-Kreislauf-System 2 (Carbonate Looping System).

Das Karbonat-Kreislauf-System 2, das in Strömungsrichtung des Verbrennungsabgases stromabwärts einer Brennkammer 1 (Postcombustion) angeordnet ist, umfasst einen Karbonator 3 mit Abscheider 6 sowie einen Wärmetauscher 16, einen Kalzinierer 4 mit Zusatzfeuerung 5 und Abscheider 7, ein Wärmeverschiebesystem 8 oder einen Wärmetauscher 11, ein Wärmeverschiebesystem 9 oder einen Wärmetauscher 12 sowie ein Wärmeverschiebesystem 10 oder einen Wärmetauscher 13, das bzw. der mit einer nicht dargestellten externen Wärmequelle kommuniziert. Ferner sind Wärmetauscher-Einrichtungen 17, 18 stromabwärts der Abscheider 6, 7 zur Kühlung der Gase vorgesehen.

Das aus der Brennkammer 1 austretende und CO₂ enthaltende Verbrennungsabgas G1, das durch die Verbrennung von kohlenstoffhaltigen Brennstoffen oder Abfällen unter Zuhilfenahme von Luft als Oxidationsmittel in der Brennkammer 1 entsteht, wird dem Karbonator 3 des Karbonat-Kreislauf-Systems 2 über einen Kanal 14 und ein Gebläse 15 zugeführt. Zur Abscheidung eines Großteils des im Verbrennungsabgas G1 enthaltenden CO₂ wird das Sorbens CaO, d.h. Kalziumoxid bzw. Branntkalk, eingesetzt und innerhalb des Karbonat-Kreislauf-Systems 2 im Kreislauf gefahren. Das CaO, das im Kalzinierer 4 bei einer Temperatur T_{Kalz} von 900-950°C produziert bzw. regeneriert wird, wird mit dieser Temperatur mittels Kanäle 23, 24 aus dem Kalzinierer 4 dem Karbonator 3 zugeführt.

Im Karbonator 3, der ein zirkulierendes Wirbelschichtbett aufweist, bindet das Sorbens CaO bei einer Temperatur T_{Karbonator} von etwa 650°C einen Großteil des im Verbrennungsabgas G1 enthaltenden CO₂ zu Kalziumkarbonat CaCO₃ Das aus dem Karbonator 3 austretende Feststoff-/Gasgemisch wird über einen Kanal 20 einem Abscheider 6 zugeführt und darin die Feststoffe von dem Verbrennungsabgas abgeschieden. Das CO₂ reduzierte Verbrennungsabgas wird über einen Kanal 21 und einen Kamin 19 oder ähnlichem der Atmosphäre zugeführt, wobei dem CO₂ reduzierten Verbrennungsabgas vor dem Austritt in die Atmosphäre noch Wärme mittels eines Wärmetauschers 17 entzogen werden kann. Die im Wesentlichen Karbonat CaCO₃, aber auch Asche, CaSO₄ und CaO aufweisenden Feststoffe werden als Karbonat - Feststoffmassenstrom F1 über einen Kanal 22 dem Kalzinierer 4 zugeführt.

Im Kalzinierer 4 wird CaCO₃ bei einer Kalziniertemperatur T_{Kalz} von 900-950°C gebrannt bzw. kalziniert und dabei ein festes und ein gasförmiges Produkt erzeugt. Das feste Produkt weist im Wesentlichen aus dem CaCO₃ regeneriertes CaO bzw. Sorbens und das gasförmige Produkt weist im wesentlichen CO₂ und Wasser auf. Da das Kalzinieren als endotherme Reaktion abläuft, muss Wärme in den Kalzinierer 4 eingebracht werden, um die erforderliche Kalzinier- bzw. Reaktionstemperatur T_{Kalz} bereit zu stellen. Dies erfolgt durch eine Zufeuerung 5 im Kalzinierer 4, bei der Kohle mittels des Oxidierungsmittels bzw. Oxidans O₂ verfeuert und damit Wärme Q₂ in den mit einem zirkulierenden Wirbelschichtbett ausgebildeten Kalzinierer 4 eingebracht wird. Um das im Kalzinierer 4 entstehende gasförmige Produkt nicht mit beispielsweise Stickstoff zu verdünnen und somit die Abscheidung des CO₂ zu erschweren, wird für die Zufeuerung als Oxidans obligatorischerweise O₂ anstelle von Luft verwendet. Das regenerierte Sorbens CaO als festes Produkt sowie das im wesentlichen CO₂ enthaltende Gasprodukt wird mit einer Produktwärme von etwa 900°C aus dem Kalzinierer 4 ausgeleitet und über einen Kanal 23 einem Abscheider 7 zugeführt und darin das Sorbens bzw. das feste Produkt von dem Gas abgeschieden. Ausgehend von dem Abscheider 7 wird das etwa 900°C heiße Sorbens als Feststoffmassenstrom F2 über einen Kanal 24 dem Karbonator 3 zugeführt. Das etwa 900°C heiße und im Wesentlichen CO₂ enthaltende Gasprodukt wird als Gasmassenstrom G2 aus dem Abscheider 7 ausgeleitet und über einen Kanal 25 einer weiteren Behandlung zugeführt, wobei das CO₂ beispielsweise abgekühlt, komprimiert und zur Lagerung transportiert werden kann. Zur Abkühlung kann beispielsweise ein Wärmetauscher 18 eingesetzt werden. Das vorbeschriebene Verfahren läuft kontinuierlich ab.

Erfindungsgemäß wird die mittels der Zufeuerung 5 erfolgte Wärmezufuhr Q_{Z} zur Aufrechterhaltung der Kalziniertemperatur T_{Kalz} innerhalb des Kalzinierers 4 zum Teil ersetzt, in dem Wärme aus einer oder mehreren Wärmequelle(n) entnommen und durch indirekten Wärmetausch mittels Wärmetauscher 11, 12, 13 oder durch Wärmeverschiebung mittels Wärmeverschiebesystem 8, 9, 10 dem Karbonat enthaltenden Karbonat - Feststoffmassenstrom F1 vor dessen Eintritt in den Kalzinierer 4 oder innerhalb des Kalzinierers 4 zugeführt wird. Figur 1 zeigt beispielhaft die Entnahme von Wärme aus drei Wärmequellen und mittels Wärmeverschiebesysteme 8, 9, 10 auf, wobei ein Teil der Wärme aus dem Sorbens enthaltenden und durch Kanal 24 geleiteten Sorbens - Feststoffmassenstrom F2, ein weiterer Teil der Wärme aus dem CO₂ enthaltenden und durch Kanal 25 geleiteten Gasmassenstrom G2 und ein weiterer Teil der Wärme aus einer nicht dargestellten externen Wärmequelle entnommen wird. Die externe Wärmequelle weist dabei eine höhere Temperatur als die im Karbonator 3 herrschende Betriebstemperatur T_{Karbonator} auf. Anstelle der beispielhaft angeführten drei Wärmequellen können auch nur zwei oder eine der aufgezeigten Wärmequellen herangezogen werden, um die mittels der Zufeuerung 5 erfolgte Wärmezufuhr Q_{z} zur Aufrechterhaltung der Kalziniertemperatur T_{Kalz} innerhalb des Kalzinierers 4 zum Teil zu ersetzen. Ferner können anstelle der Wärmeverschiebesysteme 8, 9, 10 Wärmetauscher 11, 12, 13 oder an einer Wärmequelle ein Wärmeverschiebesystem und an einer anderen Wärmequelle ein Wärmetauscher eingesetzt werden. Als externe Wärmequelle kann beispielsweise heißes Verbrennungsabgas aus der Brennkammer 1 oder ein heißes Medium einer nicht dargestellten externen Anlage herangezogen werden.

Durch die erfindungsgemäße Zufuhr von Wärme aus einer oder mehreren Wärmequelle(n) zur Aufrechterhaltung der Kalziniertemperatur T_{Kalz} innerhalb des Kalzinierers 4 und der damit zum Teil ersetzten Wärmezufuhr Q_{z} mittels der Zufeuerung 5 kann ein Großteil des Sauerstoff-bzw. O₂-Bedarfs (als technisches Gas) für das Verfeuern der Kohle in der Zufeuerung 5 eingespart werden. Dadurch wird der energetische Aufwand für die Sauerstoffherstellung und der damit auftretende Wirkungsgradverlust der Anlage wesentlich reduziert.

Neben dem beispielhaft als Sorbens angeführten CaO können ferner natürliche oder synthetische Materialien verwendet werden, die beim Karbonisieren im Karbonator 3 ein Karbonat bilden. Diese können beispielsweise Dolomite, Kalksteine oder vorbehandelte natürliche Sorbentien sein.

Die für den Wärmetausch vorgesehenen Wärmetauscher 11, 12, 13 können in ihrer Funktion regenerativ oder rekuperativ ausgebildet sein. Des Weiteren besitzen die für den Wärmetausch vorgesehenen Wärmeverschiebesysteme 8, 9, 10 einen Wärmeträger, der günstige thermodynamische Eigenschaften wie beispielsweise eine hohe Wärmekapazität cₚ aufweist. Vorzugsweise wird als Wärmeträger Helium oder Natrium verwendet.

## Patentansprüche

1. Verfahren zur Abscheidung von CO₂ aus Verbrennungsabgas, das durch die Verbrennung von kohlenstoffhaltigen Brennstoffen oder Abfällen unter Zuhilfenahme von Luft als Oxidationsmittel in einer Brennkammer (1) entsteht, wobei das Verfahren die Schritte umfasst: Einleitung des CO₂ enthaltenden und aus der Brennkammer (1) ausgeleiteten Verbrennungsabgasstromes (G1) in den Karbonator (3) eines wenigstens einen Karbonator (3), einen Kalzinierer (4) und einen Abscheider (7) aufweisenden Karbonat-Kreislauf-Systems (2), in dem ein Karbonat bildendes Sorbens im Kreislauf gefahren wird, wobei das Sorbens sich im Karbonator (3) mit dem CO₂ des Verbrennungsabgasstromes (G1) zu einem Karbonat verbindet, das Karbonat als Karbonat -Feststoffmassenstrom (F1) dem Kalzinierer (4) zugeführt wird und unter Wärmezufuhr (Q_{z}) mittels einer Sauerstoff als Oxidans benutzenden Zufeuerung (5) bei der karbonatspezifischen Kalziniertemperatur (T_{Kalz}) gebrannt wird und dabei regeneriertes Sorbens und ein im Wesentlichen CO₂ enthaltendes Gas gebildet wird, wobei das eine Wärmemenge enthaltende regenerierte Sorbens im Abscheider (7) vom CO₂ enthaltenden Gas abgeschieden wird und als Sorbens - Feststoffmassenstrom (F2) zur Karbonisierung von CO₂ dem Karbonator (3) und das eine Wärmemenge enthaltende Gas als Gasmassenstrom (G2) einer weiteren Behandlung zugeführt wird, **dadurch gekennzeichnet, dass** die mittels Zufeuerung (5) erfolgte Wärmezufuhr (Q_{z}) zur Aufrechterhaltung der Kalziniertemperatur (T_{Kalz}) zum Teil ersetzt wird, indem Wärme aus einer oder mehreren Wärmequelle(n) entnommen und durch Wärmeverschiebung dem Karbonat - Feststoffmassenstrom (F1) vor dessen Eintritt in den Kalzinierer (4) oder innerhalb des Kalzinierers (4) zugeführt wird und wobei als Wärmequelle der erwärmte Sorbens-Feststoffmassenstrom (F2) herangezogen wird und die Entnahme eines Teils dessen enthaltender Wärme vor Eintritt des Sorbens-Feststoffmassenstroms (F2) in den Karbonator (3) erfolgt und wobei als Wärmequelle der am Abscheider (7) stromabwärts des Kalzinierers austretende und erwärmte Gasmassenstrom (G2) herangezogen wird und die Entnahme eines Teils dessen enthaltender Wärme vor einer weiteren wärmeseitigen Behandlung erfolgt und wobei die Wärmeverschiebung mittels eines Wärmeträgers erfolgt, wobei als Wärmeträger Helium oder Natrium verwendet wird..

2. Verfahren nach Anspruch 1, **dadurch gekennzeichnet, dass** als Sorbens natürliche oder synthetische Materialien verwendet werden.

3. Verfahren nach Anspruch 1, **dadurch gekennzeichnet, dass** als Sorbensmittel CaO verwendet wird.

4. Verfahren nach Anspruch 1, **dadurch gekennzeichnet, dass** der Wärmetausch regenerativ oder rekuperativ erfolgt.

5. Verfahren nach Anspruch 1, **dadurch gekennzeichnet, dass** für die Zufeuerung im Kalzinierer fossile Brennstoffe oder Biomasse oder Abfälle oder eine Mischung der vorgenannten Stoffe benutzt werden.

6. Anordnung zur Abscheidung von CO₂ aus Verbrennungsabgas, das durch die Verbrennung von kohlenstoffhaltigen Brennstoffen oder Abfällen unter Zuhilfenahme von Luft als Oxidationsmittel in einer Brennkammer (1) entsteht, wobei die Anordnung aufweist:
- ein Karbonat-Kreislauf-System (2), das in Strömungsrichtung des Verbrennungsabgases (G1) gesehen stromabwärts der Brennkammer (1) angeordnet ist und wenigstens einen Karbonator (3) und einen Kalzinierer (4) und einen Abscheider (7) aufweist und in dem ein Karbonat bildendes Sorbens im Kreislauf gefahren wird, wobei das Sorbens sich im Karbonator (3) mit dem CO₂ des Verbrennungsabgasstromes (G1) zu einem Karbonat verbindet, das Karbonat als Karbonat - Feststoffmassenstrom (F1) dem Kalzinierer (4) zugeführt wird und unter Wärmezufuhr (Q_{z}) mittels einer Sauerstoff als Oxidans benutzenden Zufeuerung (5) bei der karbonatspezifischen Kalziniertemperatur (T_{Katz}) gebrannt wird und dabei regeneriertes Sorbens und ein im wesentlichen CO₂ enthaltendes Gas gebildet wird, wobei das eine Wärmemenge enthaltende regenerierte Sorbens im Abscheider (7) vom Gas abgeschieden wird und als Sorbens -Feststoffmassenstrom (F2) zur Karbonisierung von CO₂ dem Karbonator (3) und das eine Wärmemenge enthaltende Gas als Gasmassenstrom (G2) einer weiteren Behandlung zugeführt wird, **gekennzeichnet durch**
- wenigstens ein Wärmeverschiebesystem (8, 9, 10) zur jeweiligen Entnahme von Wärme aus einer oder mehrerer Wärmequelle(n) und Zuführung dieser Wärme in den Karbonat - Feststoffmassenstrom (F1) vor dessen Eintritt in den Kalzinierer (4) oder innerhalb des Kalzinierers (4), wobei die Zuführung dieser Wärme die mittels einer Zufeuerung (5) erfolgte Wärmezufuhr (Q_{z}) zur Aufrechterhaltung der Kalziniertemperatur (T_{Kalz}) zum Teil ersetzt, und wobei das Wärmeverschiebesystem (8, 9, 10) derart ausgelegt ist, dass als Wärmequelle der erwärmte Sorbens-Feststoffmassenstrom (F2) und der Gasmassenstrom (G2) genutzt wird, wobei das Wärmeverschiebesystem (8, 9, 10) einen Wärmeträger besitzt, wobei der Wärmeträger Helium oder Natrium ist.

7. Anordnung nach Anspruch 6, **dadurch gekennzeichnet, dass** der Wärmetauscher (11, 12, 13) als Regenerativ- oder Rekuperativ-Wärmetauscher ausgebildet ist.

## Claims

1. Process for separating CO₂ from combustion offgas formed by combustion of carbon-containing fuels or waste with the aid of air as oxidant in a combustion chamber (1), wherein the process comprises the steps: introduction of the CO₂-containing combustion offgas stream (G1) conveyed out of the combustion chamber (1) into the carbonator (3) of a carbonate circuit system (2) which has at least one carbonator (3), a calciner (4) and a separator (7) and in which a carbonate-forming sorbent is circulated, where the sorbent combines with the CO₂ of the combustion offgas stream (G1) to form a carbonate in the carbonator (3), the carbonate is fed as carbonate solids stream (F1) to the calciner (4) and is fired with introduction of heat (Q_{z}) by means of a supplementary firing (5) using oxygen as oxidant at the carbonate-specific calcination temperature (T_{calc}) and to form regenerated sorbent and a gas containing essentially CO₂, where the regenerated sorbent containing a quantity of heat is separated in the separator (7) from the CO₂-containing gas and fed as sorbent solids stream (F2) to the carbonator (3) for carbonate formation from CO₂ and the gas containing a quantity of heat is fed as gas stream (G2) to a further treatment, **characterized in that** the introduction of heat (Q_{z}) effected by means of the supplementary firing (5) is, in order to maintain the calcination temperature (T_{calc}), partly replaced by heat being taken from one or more heat source (s) and introduced by heat exchange into the carbonate solids stream (F1) before the latter enters the calciner (4) or within the calciner (4) and the heated sorbent solids stream (F2) is employed as heat source and the taking-off of part of the heat present therein is effected before the sorbent solids stream (F2) enters the carbonator (3) and the heated gas stream (G2) leaving the separator (7) downstream of the calciner is employed as heat source and the taking-off of part of the heat present therein is effected before a further heat-side treatment and the heat exchange is effected by means of a heat transfer medium, with helium or sodium being used as heat transfer medium.

2. Process according to Claim 1, **characterized in that** natural or synthetic materials are used as sorbent.

3. Process according to Claim 1, **characterized in that** CaO is used as sorbent.

4. Process according to Claim 1, **characterized in that** heat exchange is effected regeneratively or recuperatively.

5. Process according to Claim 1, **characterized in that** fossil fuels or biomass or waste or a mixture of the abovementioned materials are used for the supplementary firing in the calciner.

6. Arrangement for separating CO₂ from combustion offgas formed by combustion of carbon-containing fuels or waste with the aid of air as oxidant in a combustion chamber (1), wherein the arrangement comprises:
- a carbonate circuit system (2) which is arranged downstream of the combustion chamber (1) in the flow direction of the combustion offgas (G1) and has at least one carbonator (3) and a calciner (4) and a separator (7) and in which a carbonate-forming sorbent is circulated, where the sorbent combines with the CO₂ of the combustion offgas stream (G1) to form a carbonate in the carbonator (3), the carbonate is fed as carbonate solids stream (F1) to the calciner (4) and is fired with introduction of heat (Q_{z}) by means of a supplementary firing (5) using oxygen as oxidant at the carbonate-specific calcination temperature (T_{calc}) to form regenerated sorbent and a gas containing essentially CO₂, where the regenerated sorbent containing a quantity of heat is separated in the separator (7) from the gas and fed as sorbent solids stream (F2) to the carbonator (3) for carbonate formation from CO₂ and the gas containing a quantity of heat is fed as gas stream (G2) to a further treatment, **characterized by**
- at least one heat exchange system (8, 9, 10) for taking heat from one or more heat source(s) and introducing this heat into the carbonate solids stream (F1) before the latter enters the calciner (4) or within the calciner (4), where the introduction of this heat partly replaces the introduction of heat (Q_{z}) effected by means of a supplementary firing (5) in order to maintain the calcination temperature (T_{calc}) and the heat exchange system (8, 9, 10) is designed in such a way that the heated sorbent solids stream (F2) and the gas stream (G2) is utilized as heat source, where the heat exchange system (8, 9, 10) has a heat transfer medium, with the heat transfer medium being helium or sodium.

7. Arrangement according to Claim 6, **characterized in that** the heat exchanger (11, 12, 13) is configured as regenerative or recuperative heat exchanger.

## Revendications

1. Procédé de séparation de CO₂ de gaz d'échappement de combustion, qui est produit par la combustion de combustibles ou de déchets contenant du carbone à l'aide d'air comme agent oxydant dans une chambre de combustion (1), dans lequel le procédé comprend les étapes suivantes: introduction du courant de gaz d'échappement de combustion (G1) contenant du CO₂ et évacué de la chambre de combustion (1) dans le carbonateur (3) d'un système de circuit de carbonateur (2) comprenant au moins un carbonateur (3), un calcinateur (4) et un séparateur (7), dans lequel un sorbant formant un carbonate est transporté dans le circuit, dans lequel le sorbant se lie dans le carbonateur (3) en un carbonate avec le courant de gaz d'échappement de combustion contenant du CO₂ (G1), le carbonate est envoyé au calcinateur (4) en tant que courant massique solide de carbonate (F1) et il est brûlé avec apport de chaleur (Q_{z}) à la température de calcination spécifique du carbonate (T_{Kalz}) au moyen d'un allumage (5) utilisant de l'oxygène comme oxydant, et il se forme ainsi un sorbant régénéré et un gaz contenant essentiellement du CO₂, dans lequel le sorbant régénéré contenant une quantité de chaleur est séparé dans le séparateur (7) du gaz contenant du CO₂ et est envoyé au carbonateur (3) en tant que courant massique solide de sorbant (F2) pour la carbonisation de CO₂ et le gaz contenant une quantité de chaleur est envoyé à un traitement ultérieur en tant que courant massique de gaz (G2), **caractérisé en ce que** l'apport de chaleur (Q_{z}) résultant de l'allumage (5) pour le maintien de la température de calcination (T_{Kalz}) est remplacé en partie, du fait que de la chaleur est prélevée d'une ou de plusieurs source(s) de chaleur et est fournie par transfert de chaleur au courant massique solide de carbonate (F1) avant son entrée dans le calcinateur (4) ou à l'intérieur du calcinateur (4) et dans lequel on utilise comme source de chaleur le courant massique solide de sorbant chauffé (F2) et le prélèvement d'une partie de la chaleur qu'il contient est effectué avant l'entrée du courant massique solide de sorbant (F2) dans le carbonateur (3), et dans lequel on utilise comme source de chaleur le courant massique de gaz (G2) chauffé et sortant au séparateur (7) en aval du calcinateur et le prélèvement d'une partie de la chaleur qu'il contient est effectué avant un autre traitement du côté chaud et dans lequel le transfert de chaleur est effectué au moyen d'un porteur de chaleur, dans lequel on utilise comme porteur de chaleur de l'hélium ou du sodium.

2. Procédé selon la revendication 1, **caractérisé en ce que** l'on utilise comme sorbant des matériaux naturels ou synthétiques.

3. Procédé selon la revendication 1, **caractérisé en ce que** l'on utilise du CaO comme agent sorbant.

4. Procédé selon la revendication 1, **caractérisé en ce que** l'échange de chaleur est effectué par régénération ou par récupération.

5. Procédé selon la revendication 1, **caractérisé en ce que** l'on utilise pour l'allumage dans le calcinateur des combustibles fossiles ou de la biomasse ou des déchets ou un mélange des matériaux précités.

6. Agencement de séparation de gaz d'échappement de combustion contenant du CO₂, qui est produit par la combustion de combustibles ou de déchets contenant du carbone à l'aide d'air comme agent oxydant dans une chambre de combustion (1), dans lequel l'agencement comprend:
- un système de circuit de carbonate (2), qui est disposé en aval de la chambre de combustion (1) par rapport à la direction d'écoulement du gaz d'échappement de combustion (G1) et qui présente au moins un carbonateur (3) et un calcinateur (4) et un séparateur (7)) et dans lequel un sorbant formant un carbonate est transporté en circuit, dans lequel le sorbant se lie en un carbonate dans le carbonateur (3) avec le courant de gaz d'échappement de combustion contenant du CO₂, le carbonate est envoyé au calcinateur (4) en tant que courant massique solide de carbonate (F1) et il est brûlé avec apport de chaleur (Q_{z}) à la température de calcination spécifique du carbonate (T_{Kalz}) au moyen d'un allumage (5) utilisant de l'oxygène comme oxydant et il se forme ainsi du sorbant régénéré et un gaz contenant essentiellement du CO₂, dans lequel un sorbant régénéré contenant une quantité de chaleur est séparé du gaz dans le séparateur (7) et est envoyé au carbonateur (3) en tant que courant massique solide de sorbant (F2) pour la carbonisation de CO₂ et le gaz contenant une quantité de chaleur est envoyé en tant que courant massique de gaz (G2) à un traitement ultérieur, **caractérisé par**
- au moins un système de transfert de chaleur (8, 9, 10) pour le prélèvement respectif de chaleur d'une ou de plusieurs source(s) de chaleur et l'envoi de cette chaleur dans le courant massique solide de carbonate (F1) avant son entrée dans le calcinateur (4) ou à l'intérieur du calcinateur (4), dans lequel l'envoi de cette chaleur remplace en partie l'apport de chaleur (Q_{z}) effectué au moyen de l'allumage (5) pour le maintien de la température de calcination (T_{Kalz}), et dans lequel le système de transfert de chaleur (8, 9, 10) est conçu de telle manière que l'on utilise comme source de chaleur le courant massique solide de sorbant chauffé (F2) et le courant massique de gaz (G2), dans lequel le système de transfert de chaleur (8, 9, 10) possède un porteur de chaleur, dans lequel le porteur de chaleur est l'hélium ou le sodium.

7. Agencement selon la revendication 6, **caractérisé en ce que** l'échangeur de chaleur (11, 12, 13) est réalisé sous forme d'échangeur de chaleur à régénération ou à récupération.
